# FASCICULE DE BREVET EUROPEEN

(11) **EP 2 253 935 B1**
(45) Date de publication et mention de la délivrance du brevet: **13.03.2019**
(21) Numéro de dépôt: 10163013.5
(22) Date de dépôt: 17.05.2010
(51) Int. Cl.: G01C 21/16, G01C 23/00, G08G 5/00, G08G 5/02, G01S 13/91, G01S 13/82, G01S 13/86

(54) **Procédé et système d'aide à l'atterrissage ou à l'appointage d'un aeronef**
Hilfsverfahren und -system für normale Landung oder Landung auf einem Deck für ein Luftfahrzeug
Method and system for assisting the landing or deck landing of an aircraft

(30) Priorité: 20.05.2009 FR 0902475
(43) Date de publication de la demande: 24.11.2010
(73) Titulaire: THALES, 92400 Courbevoie (FR)
(72) Inventeur: Garrec, Patrick, 33700, MERIGNAC (FR); Cornic, Pascal, 29200, BREST (FR)
(74) Mandataire: Lucas, Laurent Jacques

(56) Documents cités:
- EP-A1- 1 424 566
- WO-A1-2007/063126
- WO-A1-2007/131923
- WO-A2-01/86229
- WO-A2-01/86319
- WO-A2-02/091595
- US-A- 5 216 611
- US-A1- 2003 122 666

## Description

La présente invention concerne un procédé et un système d'aide à l'atterrissage ou à l'appontage d'un aéronef léger. Elle s'applique en particulier au domaine de l'aéronautique légère civile, notamment pour faciliter l'atterrissage des avions de plaisance, des petits avions de transports et des hélicoptères.

Parmi les systèmes d'aide à l'atterrissage des aéronefs, les plus connus sont les systèmes ILS, sigle anglo-saxon pour « Instrument Landing System ». Les systèmes ILS sont des systèmes d'approche aux instruments pour les aéronefs qui en sont équipés. Le système ILS fournit des informations aidant le pilote dans sa manoeuvre à l'atterrissage. Ces systèmes nécessitent donc une instrumentation spécifique à bord de l'aéronef ainsi que des systèmes de détection et de guidage au sol.

Un autre système de guidage employé sur les aéroports est le MLS, signifiant « Microwave Landing System » en langage anglo-saxon. Le MLS est un système d'atterrissage hyperfréquence. Il permet d'effectuer un guidage de précision pour un atterrissage, quelles que soient les conditions météorologiques.

Les systèmes ILS et MLS sont des équipements très lourds aussi bien au sol qu'à bord de l'aéronef. Les aéronefs légers ne peuvent embarquer l'équipement nécessaire à la mise en oeuvre de ces systèmes autant pour des raisons de coût que de manque de place.

Hormis ces moyens classiques principalement utilisés par l'aviation civile commerciale, d'autres solutions peuvent être envisagées.

Une première solution utilise un système de positionnement par satellites, ce type de système étant communément désigné par le sigle GNSS pour « Global Navigation Satellite System ». Parmi ces systèmes de positionnement, le système GPS pour « Global Positioning System » est aujourd'hui le plus largement utilisé. Les systèmes GNSS ont pour principal inconvénient leur manque de robustesse. En effet, ce type de service n'est pas toujours disponible et est sensible aux perturbations électromagnétiques.

Une deuxième solution est l'utilisation d'un système LIDAR, acronyme anglo-saxon pour « Light Détection And Ranging ». Ce système de localisation, fonctionnant sur le même principe que les radars, utilise des lasers dans le domaine du visible, voire dans le domaine de l'infrarouge. Ceci le rend donc inopérant lorsque les conditions météorologiques sont défavorables.

Une autre solution consiste à utiliser un radar à ondes millimétriques très directif. Le radar à ondes millimétriques nécessite une phase de recherche pour la désignation de la cible. Il doit également être positionné de manière précise par rapport à la piste d'atterrissage. Cette solution est, de plus, très coûteuse et nécessite souvent un répondeur embarqué à bord de l'aéronef. Le répondeur est lui-même coûteux, volumineux, lourd, et consomme beaucoup d'énergie. Il faut de plus le redonder pour des raisons de sécurité de fonctionnement.

D'autres méthodes de localisation permettant le guidage automatique d'aéronefs autonomes ont été proposées par le passé. On peut notamment citer la demande de brevet internationale référencée sous le numéro WO2006/053868, laquelle propose notamment d'utiliser un radar au sol et une balise multifonctions à bord de l'aéronef. Mais cette dernière méthode ne résout pas le problème de l'aide à l'atterrissage d'aéronefs pilotés à bord, notamment lorsque les conditions environnementales sont défavorables, par exemple lorsque la visibilité est quasi-nulle par temps de brouillard.

Une technique décrite dans la demande de brevet internationale WO 02/091595 permet de guider un aéronef en phase d'atterrissage à l'aide d'un échange interrogateur-répondeur entre le sol et l'aéronef. Toutefois, ce système synchrone nécessite des équipements spécifiques importants, tant au niveau du sol que de l'aéronef. De plus, ce système souffre d'une zone aveugle importante à proximité du radar secondaire au sol et la mise en oeuvre d'un tel système est complexe du fait de la précision requise.

Un but de l'invention est de proposer un procédé peu coûteux permettant de faciliter l'atterrissage d'un aéronef léger piloté à bord. A cet effet, l'invention a pour objet un procédé d'aide à l'atterrissage ou à l'appontage d'un aéronef piloté à bord tel que décrit par les revendications.

L'invention a également pour objet un système d'aide à l'atterrissage ou à l'appontage d'un aéronef piloté à bord tel que décrit par les revendications.

Par « dispositif de localisation », on entend un dispositif adapté à mesurer la position de l'aéronef mais pas seulement. En effet, un tel dispositif peut également mesurer d'autres paramètres tels que la vitesse radiale de l'aéronef. A titre d'exemple, les données transmises à l'aéronef par le dispositif au sol sont la position de l'aéronef, sa vitesse radiale, la pression barométrique mesurée au sol. Le pilote reste toujours maître des manoeuvres effectuées car le système selon l'invention n'agit pas sur les commandes de l'aéronef ; il apporte des informations supplémentaires au pilote et permet de fiabiliser les informations dont il dispose déjà avec les instruments du bord.

Par aéronef léger, on entend un aéronef dont la capacité maximale certifiée figurant sur les documents de navigabilité associés à l'aéronef est inférieure à 10 sièges à l'exception des sièges pilotes, ou un giravion dont capacité maximale certifiée figurant sur les documents de navigabilité associés à l'aéronef est inférieure à 6 sièges à l'exception des sièges pilotes, ou un avion dont la masse maximale certifiée au décollage est inférieure à 6000 kg, ou un giravion dont la masse maximale certifiée au décollage est inférieure à 3000 kg.

Avantageusement, l'émetteur embarqué dans l'aéronef émet un signal sinusoïdal continu.
Le procédé selon l'invention peut comprendre également une étape de corrélation des données issues du dispositif de localisation de l'aéronef à partir du sol avec les données produites par les instruments du bord, les résultats de cette étape de corrélation étant exploités à bord de l'aéronef. Ces données corrélées peuvent ensuite être affichées, peuvent par exemple permettre de consolider les données issues des instruments du bord. Cette étape de corrélation peut notamment permettre de déceler une anomalie dans les mesures effectuées par les instruments du bord.

Selon un mode de mise en oeuvre du procédé selon l'invention, on détermine un indice de cohérence des données à partir de l'étape de corrélation, et on lève une alarme pour le pilote lorsque ledit indice est en deçà d'un seuil fixé.

Une liaison de données radioélectrique bidirectionnelle peut être établie entre le dispositif de localisation au sol et l'aéronef, les mesures issues d'instruments embarqués par l'aéronef étant transmises au dispositif de localisation au sol via ladite liaison de données, ledit dispositif au sol exploitant lesdites mesures pour affiner sa détermination des données relatives à la position et/ou au déplacement de l'aéronef. Par exemple, la vitesse « vent » estimée depuis l'aéronef peut être transmise au sol. Des analyses peuvent être effectuées au sol, de manière à générer un indice de fiabilité, lever une alerte en cas d'anomalie.

Selon un mode de mise en oeuvre du procédé selon l'invention, l'aéronef insère, parmi les données émises vers le dispositif de localisation au sol, un identifiant propre à l'aéronef, ledit dispositif insérant en retour ledit identifiant parmi les données transmises vers l'aéronef. L'utilisation de cet identifiant comme signature permet de ne prendre en compte, au niveau de l'aéronef, que les données qui lui sont destinées sans être perturbé par les données destinées à d'autres aéronefs.

L'invention a également pour objet un système d'aide à l'atterrissage ou à l'appontage d'un aéronef piloté à bord, l'aéronef étant de type aéronef léger motorisé adapté au vol à vue, le système comprenant un dispositif au sol de localisation de l'aéronef pourvu d'un senseur et d'une balise de référence, le système comprenant au moins un émetteur embarqué émettant des signaux de manière asynchrone du dispositif au sol, des moyens de transmissions de données du dispositif de localisation vers l'aéronef, et dans le cockpit de l'aéronef des moyens d'affichage desdites données transmises à l'aéronef. Le système selon l'invention peut comprendre un module de traitement embarqué relié aux moyens de transmissions de données, aux moyens d'affichage et à des instruments de mesures à bord, le module de traitement étant adapté à corréler les mesures issues desdits instruments du bord avec les mesures issues desdits moyens de transmissions de données.

Selon un mode de réalisation du système selon l'invention, les moyens d'affichage sont un écran associé à un instrument de secours intégré à l'aéronef. Les données peuvent être transmises vers l'instrument de secours intégré via un bus standard, par exemple de type Arinc 429.

Le système selon l'invention peut comprendre également des moyens d'émission de données embarqués dans l'aéronef, lesdits moyens d'émission couplés aux moyens de transmission permettant d'établir une liaison bidirectionnelle entre le dispositif de localisation au sol et l'aéronef.

Selon un mode de réalisation du système selon l'invention, les moyens de transmission de données embarqués et l'émetteur embarqué sont intégrés dans une même balise multifonctions. De même, la balise multifonctions peut comprendre des moyens d'émission et un module de traitement lorsque ces moyens sont mis en oeuvre par le système.

Le système selon l'invention permet notamment d'effectuer une localisation de l'aéronef par triangulation. En outre, le caractère passif des senseurs permet de ne pas émettre des signaux pouvant être nocifs à la santé des personnes au sol.

Avantageusement, le système selon l'invention s'applique aux aéronefs ne comportant pas de système d'atterrissage aux instruments, c'est-à-dire de système ILS.

D'autres caractéristiques apparaîtront à la lecture de la description détaillée donnée à titre d'exemple et non limitative qui suit faite en regard de dessins annexés qui représentent :
- la figure 1a, un synoptique présentant un premier exemple d'architecture du système selon l'invention,
- la figure 1b, un synoptique présentant un deuxième exemple d'architecture du système selon l'invention,
- la figure 1c, un synoptique présentant un troisième exemple d'architecture du système selon l'invention,
- la figure 2, un deuxième exemple de dispositif de localisation au sol utilisé par le système selon l'invention,
- la figure 3, un exemple de dispositif d'affichage d'horizon artificiel intégré dans un système selon l'architecture présentée en figure 1a.

Dans un souci de clarté, des références identiques dans des figures différentes désignent les mêmes éléments.

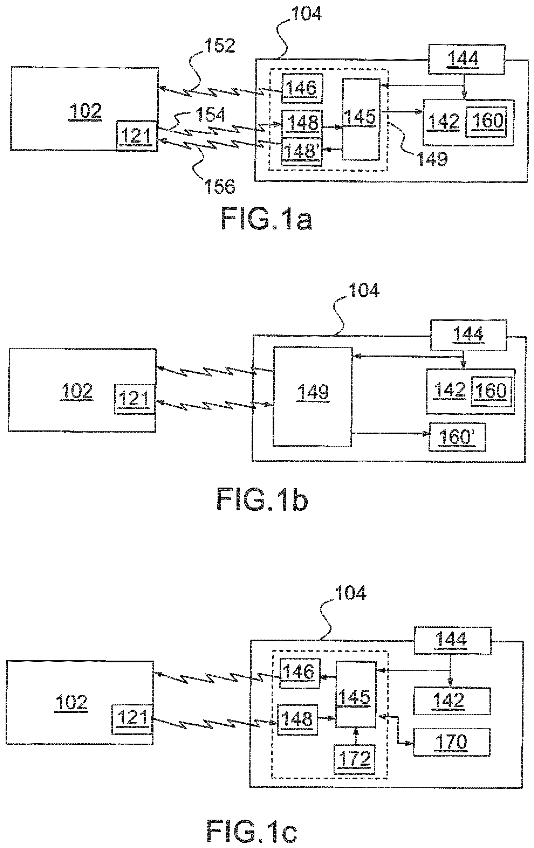

La figure 1a présente, à travers un synoptique, un premier exemple d'architecture du système selon l'invention. Le système 100 comprend, au sol, un dispositif 102 de localisation de l'aéronef 104. L'aéronef 104 comprend un instrument de secours 142, désigné communément par le sigle anglo-saxon ESI signifiant «Electronic Standby Instrument» ou IESI signifiant «Integrated Electronic Standby Instrument». Cet instrument 142 est alimenté par des moyens de mesures embarqués ou intégrés 144 comprenant par exemple des senseurs, capteurs inertiels et/ou accéléromètres et permet, via un écran 160, d'afficher les paramètres de base de navigation fournis par lesdits moyens de mesures 144, au moins l'altitude de l'aéronef 104, sa vitesse et son attitude.

Contrairement à une configuration classique, l'IESI 142 est, dans le système selon l'invention, également alimenté par le dispositif 102 de localisation de l'aéronef 104. Le dispositif de localisation 102 exploite un signal 152 issu d'un émetteur 146 embarqué sur l'aéronef 104 pour déterminer, notamment, la position de cet aéronef 104. Le dispositif de localisation 102 transmet ensuite cette position - et d'autres paramètres, le cas échéant - à l'aéronef 104, via une liaison radioélectrique 154 établie entre un émetteur au sol 121 et des moyens de réceptions 148, par exemple un récepteur antennaire, embarqués adaptés à recevoir les paramètres. Les données issues du dispositif de localisation 102 sont ensuite exploitées à bord de l'aéronef 104.

Par exemple, ces données sont affichées et/ou corrélées avec les données déjà disponibles à bord. Pour effectuer la corrélation des données, le système peut comprendre, à bord de l'aéronef 104, un module de traitement 145, par exemple un microcontrôleur, apte à recevoir à la fois des données issues des instruments embarqués par l'aéronef 104 et des données issues du dispositif de localisation 102 et transmises par les moyens de réception 148. La corrélation de données permet notamment de produire des indices de fiabilité concernant les mesures. A titre d'exemple de corrélations possibles, on peut notamment effectuer une comparaison des vitesses et des altitudes mesurées au sol et par les instruments du bord. Lorsque des différences anormales apparaissent, une alerte peut être levée pour le pilote. L'IESI 142 est, dans l'exemple, alimenté par le module de traitement 145 ; néanmoins, l'IESI 142 peut également être alimenté directement par les données issues du dispositif 102 sol et transmises par les moyens de réception 148.

Selon un mode de réalisation du système selon l'invention, des moyens d'émission de données 148', par exemple un émetteur antennaire, sont couplés aux moyens de réceptions 148 pour permettent d'établir avec le dispositif de localisation 102 au sol une liaison radioélectrique bidirectionnelle 154, 156. Ainsi, des données telles que les mesures effectuées par les instruments propres à l'aéronef 104 peuvent être transmises vers le sol pour être exploitées. Le dispositif de localisation 102 au sol peut, grâce à ces données du bord, affiner ou corriger les mesures effectuées au sol. Le dispositif de localisation au sol 102 peut, par exemple, comprendre un logiciel d'analyse apte à comparer les données issues de l'aéronef et les données mesurées au sol. En cas d'anomalie - par exemple, si la pente de descente de l'aéronef 104 est trop importante -, une alerte peut être levée et envoyée au pilote et/ou au contrôleur. Selon un autre mode de réalisation, l'émetteur 146 est utilisé pour émettre des données au sol, selon un principe déjà décrit dans la demande de brevet internationale référencée sous le numéro WO2007/063126.

Avantageusement, l'aéronef 104 embarque une balise multifonctions 149 comportant le module de traitement 145, l'émetteur 146, les moyens de réception 148 et, lorsqu'ils existent, les moyens d'émission de données 148'. Ainsi, en rassemblant les éléments embarqués nécessaires au fonctionnement du système dans une même balise 149, l'impact matériel sur l'aéronef 104 est minimisé. Par exemple, lorsqu'on dispose d'une balise multifonctions 149 adaptée à fonctionner en émission et réception derrière les pales d'une hélice, ladite balise multifonctions 149 peut être fixée sur le pare-brise de l'aéronef 104, ce qui permet d'éviter les contraintes d'intégration spécifique au cockpit de l'aéronef 104.

Avantageusement, l'émetteur 146 transmet vers le sol un identifiant permettant de distinguer les données émises par l'aéronef 104 des données éventuellement émises par d'autres aéronefs, cet identifiant pouvant être, par exemple, spécifique à la balise multifonctions 149 lorsqu'une telle balise est embarquée sur l'aéronef 104. Cet identifiant est ensuite, par exemple, codé dans les données émises par le dispositif de localisation 102 vers l'aéronef 104, de sorte que si plusieurs aéronefs équipés du système selon l'invention reçoivent lesdites données, seul l'aéronef 104 à qui sont destinées ces données les prend en compte.

En l'absence de moyens de réceptions 148 ou lorsque ceux-ci sont défaillants, la balise VOR/DME « VHF Omnidirectional Range / Distance Measuring Equipment » classiquement disponible sur un aéronef 104 peut être utilisée pour recevoir les signaux émis par le dispositif 102 au sol.

La figure 1b présente, à travers un synoptique, un deuxième exemple d'architecture du système selon l'invention. Selon ce mode de réalisation, les données issues du dispositif de localisation 102 au sol sont affichées sur un écran 160' dédié, indépendant de l'IESI 142. Les informations délivrées sur cet écran dédié 160' sont fournies au pilote à titre de complément des données affichées sur l'écran 160 de l'IESI 142. La balise multifonctions 149 est reliée à l'écran dédié 160'. Selon un mode de réalisation alternatif, l'écran dédié 160' peut être intégré à la balise multifonctions 149 lorsque celle-ci peut être positionnée de manière à offrir un accès visuel satisfaisant au pilote.

En outre, un fonctionnement sur batterie et/ou sur un générateur de l'aéronef 104 est envisageable, du fait de la faible consommation d'énergie requise par le système.

La figure 1c présente, à travers un synoptique, un troisième exemple d'architecture du système selon l'invention. Selon ce mode de réalisation, un terminal 170 de positionnement par satellite, par exemple un terminal GPS, est disponible et l'écran de ce terminal 170 est utilisé pour afficher les données issues du dispositif de localisation 102 au sol. Dans l'exemple, l'émetteur 146 sert à la fois à émettre des signaux destinés à faciliter la détection de l'aéronef 104, mais aussi à émettre des données vers le dispositif 102 de localisation au sol ; autrement dit l'émetteur 146 remplit également les fonctions des moyens d'émission de données 148' de la figure 1a.

Les données issues du dispositif de localisation 102 au sol peuvent être comparées aux données fournies par le terminal de positionnement par satellite 170. Le terminal 170 peut fournir des mesures moyennement fiables, en particulier pour les mesures d'altitude. Aussi, il peut être utile de corréler ces mesures avec celles qui sont issues du dispositif de localisation au sol 102. Notamment, comme les données mesurées au sol peuvent également être affectées par un biais, il peut s'avérer judicieux d'exploiter l'évolution des mesures produites par le dispositif 102 au sol pour corriger les mesures obtenues via le système embarqué de positionnement par satellite. Selon un mode de réalisation du système selon l'invention, les données fournies par le terminal 170 sont également consolidées grâce à des senseurs 172 intégrés à la balise multifonctions 149. Par exemple, si cette balise 149 comprend un proximètre, une mesure d'altitude issue d'un baro-altimètre 144 de l'aéronef 104 peut être consolidée pour le pilote à partir de la mesure issue du dispositif au sol 102 et de la mesure issue du proximètre 172 de la balise 149. Un indice de fiabilité ou coefficient de vraisemblance, dépendant du niveau de corrélation entre les mesures peut également être fourni au pilote. Toutes les indications issues du système selon l'invention sont naturellement optionnelles, l'affichage des indications étant par ailleurs désactivé lorsque le coefficient de vraisemblance passe en deçà d'un seuil minimal.

Dans un mode dégradé dans lequel les moyens de réception 148 sont inexistants ou devenus inopérants, les données issues du sol peuvent être transmises à l'aéronef 104 via une liaison radio pour informer le pilote grâce à des ordres sonores, lesquels ordres pouvant être pré enregistrés ou codés en fréquence. Par exemple, les ordres peuvent être pré enregistrés sous la forme de mots tels que « haut », «bas», «gauche», «droite», « OK », de manière à guider le pilote lorsque celui-ci doit poser l'aéronef en conditions dégradées. La répétition des ordres à l'échelle de la seconde peut garantir le bon fonctionnement du système. En outre, une hiérarchisation peut être avantageusement appliquée dans la transmission des ordres en fonction de leur criticité.

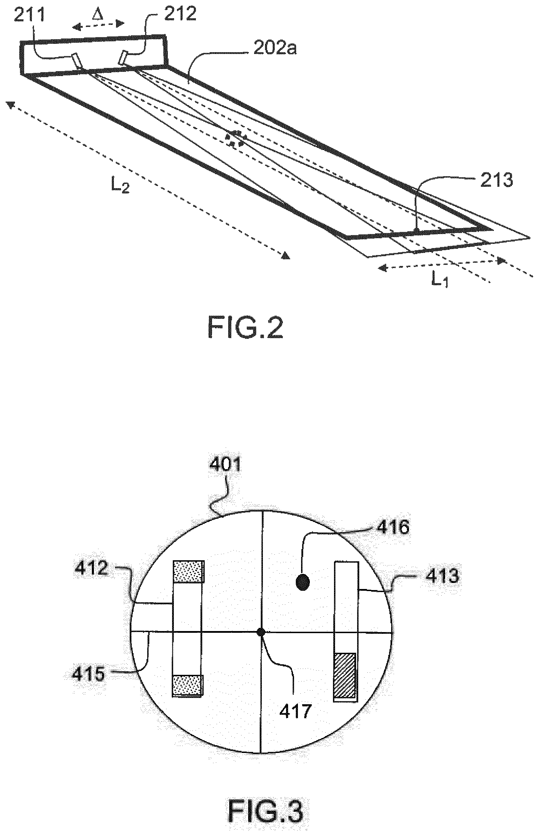

Pour prévenir un mode encore plus dégradé, dans lequel l'émetteur embarqué 146 ne fonctionne pas, on peut fixer un réflecteur sur l'aéronef 104, de manière à augmenter sa surface radar équivalente et ainsi faciliter sa localisation à l'aide du radar 203 (figure 2a) au sol. En guise de réflecteur, on peut choisir un trièdre adapté à la bande d'émission du radar, par exemple à la bande X. Des bandes adhésives métalliques disposées sur le fuselage de l'aéronef peuvent également être utilisées à ces fins. Une fois l'aéronef 104 localisé, des commandes sonores peuvent être transmises au pilote par radio.

Par ailleurs, dans ce mode dégradé, il n'est pas possible de transmettre l'identifiant associé à l'émetteur 146. En conséquence, pour établir une liaison 154 non équivoque entre le dispositif 102 au sol et l'aéronef 104, l'identification devra par exemple être effectuée via des messages radio. Une demande d'accrochage peut être émise automatiquement lorsque l'aéronef 104 se rapproche du dispositif 102 au sol à une certaine distance. Le pilote de l'aéronef 104 reçoit des ordres transmis par le dispositif 102 au sol, par exemple des ordres sonores, et est contraint d'estimer la qualité de son identification par déviation autour des positions proposées. Par exemple, l'annonce de la vitesse du véhicule peut être utilement utilisée comme un marqueur de l'accrochage. Cette vitesse peut être comparée au badin et modulée pour vérifier l'adéquation entre les données reçues et les données affichées par les instruments du bord.

La figure 2 présente le dispositif de localisation au sol utilisé par le système selon l'invention. Le dispositif de localisation de la figure 2 comprend plusieurs senseurs passifs - dans l'exemple, deux senseurs 211, 212 - et une balise de référence 213 émettrice. Selon l'invention, les senseurs 211, 212 sont des panneaux antennaires comportant plusieurs blocs d'antennes planes sur leur surface. La surface d'appontage 202a est, par exemple une piste de largeur L1 égale à 20m et de longueur L2 égale à 50m.

Ces panneaux 211, 212 sont, selon l'invention, placés à l'extrémité de la surface d'appontage 202a et dans un plan sensiblement orthogonal à cette surface 202a, de manière à rayonner vers icelle 202a. La balise de référence 213 est placée, selon l'invention, à l'autre extrémité de la surface d'appontage 202a.

Cette balise de référence 213 permet d'indiquer une direction constante aux senseurs 211, 212, d'étalonner et de calibrer lesdits senseurs 211, 212, et d'éviter les dérives thermiques en ré-étalonnant les senseurs avec l'évolution des conditions d'ensoleillement et/ou de températures. La balise de référence 213 émet un signal en direction des senseurs 211, 212, par exemple un signal sinusoïdal continu.

Le signal émis par la balise de référence 213 est d'une fréquence différente que celui du signal émis par l'émetteur 146 embarqué par l'aéronef 100.

Selon un autre mode de réalisation dans lequel les senseurs 211, 212 sont des capteurs optiques, la balise de référence 213 est une diode ou un laser utilisé pour la calibration desdits capteurs 211, 212, une telle balise 213 permettant de recaler le système en relatif par rapport à la surface d'appontage 202a et de donner une référence (un «zéro» commun) aux senseurs 211, 212. Les senseurs passifs 211, 212 sont utilisés pour localiser l'aéronef 104 par triangulation.

Un avantage de ce dispositif 102 de localisation est qu'il ne requiert pas d'émission de forte puissance à partir du sol.

En présence de parois latérales à proximité de la surface d'appontage 202a, les senseurs 211, 212 sont avantageusement penchés de sorte que les paires de blocs d'antennes soient disposées le long d'un axe formant un angle α compris, par exemple, entre 20° et 70° avec l'axe vertical. Les inclinaisons des senseurs 211, 212 peuvent être inégales et dans le même sens ou le sens opposé (par exemple, -45° pour un senseur et 45° pour l'autre). Le fait d'incliner chaque senseur 211, 212 autour d'un axe horizontal et orthogonal au plan dudit senseur permet d'effectuer également un échantillonnage spatial sur l'axe azimut de l'amplitude du signal d'interférence, lequel est constitué par la somme du signal reçu directement par le senseur 211, 212 et du signal réfléchi sur la ou les cloisons latérales puis reçu par le senseur 211, 212.

Ainsi, en effectuant l'échantillonnage spatial en deux dimensions pour chaque senseur 211, 212, on peut identifier l'endroit sur chaque senseur 211, 212 correspondant au signal d'interférence d'amplitude maximale et ré-appliquer les formules démontrées dans la demande de brevet internationale WO2007/131923.

Les amplitudes mesurées sur les antennes sont un produit d'une fonction sinus décrite dans cette demande de brevet. Le positionnement incliné des senseurs, et l'échantillonnage spatial en deux dimensions du signal d'interférence permet, en utilisant un minimum d'antennes, de s'affranchir des trajets multiples à la fois en élévation et en azimut.

La figure 3 présente un exemple de dispositif d'affichage d'horizon artificiel intégré dans un système selon l'architecture présentée en figure 1a. L'IESI 142 de l'aéronef 104 comprend un écran 401 sur lequel sont affichés plusieurs paramètres de navigation issus des moyens de mesures 144 (figure 1). L'IESI 142 comprend un calculateur permettant de produire, pour l'écran 401, une image graphique représentative de ces paramètres. Dans l'exemple non limitatif de la figure 3, un indicateur 412 sur la gauche de l'écran 401 permet de visualiser la vitesse de l'aéronef, un indicateur 413 sur la droite de l'écran 401 permet de visualiser l'altitude, et la partie horizontale 415 représente un horizon artificiel. La représentation graphique des différents indicateurs et leur disposition peut différer selon les modes de réalisation.
En supplément de ces informations déjà disponibles sur les systèmes existant, le système selon l'invention permet d'afficher, sur cet écran 401, la position de l'aéronef 104 telle qu'elle a été déterminée par le dispositif de localisation 102 au sol. Par exemple, cette position, dans un plan vertical, peut être représentée par un point 416, le point d'atterrissage ou d'appontage étant représenté, par exemple, par un point 417 situé au centre de l'écran 401.

De préférence, les données issues du dispositif de localisation 102 au sol et transmises par les moyens de réception 148 à l'IESI 142 sont formatées selon un format au standard aéronautique, par exemple le format « ARINC 429». Elles peuvent ainsi être reçues via un bus de données standard de l'IESI 142 et traitées facilement par le calculateur de l'IESI 142. Les informations supplémentaires disponibles grâce aux données fournies par le dispositif de localisation 102 peuvent être affichées sur une page d'affichage supplémentaire ou via une surimpression sur une page déjà existante.

Le système selon l'invention peut également être relié aux systèmes de contrôle du trafic aérien, communément désignés par le sigle anglo-saxon ATC signifiant « Air Trafic Control », afin de permettre une intégration complète des avions civils dans la chaîne de contrôle des aéroports. La prise en compte des avions peut, par exemple, être effectuée à partir de 10km dans l'axe de la piste d'atterrissage. La liaison entre le dispositif 102 de localisation au sol et l'aéronef 104 peut par exemple être établie pour une distance de 5 km ou moins, les données de position et de vitesse sol pouvant être envoyées vers l'aéronef 104 en coordonnées absolues ou relatives.

Le système selon l'invention peut notamment être utilisé pour faciliter l'appontage d'hélicoptères privés sur des plates-formes flottantes, par exemple sur des navires de plaisance ou en milieu urbain, par exemple sur un toit d'immeuble. Il s'applique plus particulièrement à l'aviation légère, c'est-à-dire aux aéronefs ayant un rayon d'action de l'ordre de quelques centaines de kilomètres, par exemple des avions de tourisme, des ULMs, des avions à monomoteur, des bimoteurs légers.

Plus généralement, le système selon l'invention peut être utilisé en tant que système redondant sur des aéroports, y compris ceux pourvus de systèmes ILS classe III. Ce système pourrait alors être proposé au pilote de l'aéronef comme option de « confort », notamment pour diminuer son stress, notamment en cas de mauvaise visibilité imprévue à l'atterrissage.

Un avantage du système selon l'invention est qu'il nécessite très peu d'adaptations sur l'aéronef et peu d'installations au sol, ce qui le rend à la fois rapide à mettre en oeuvre et peu coûteux.

## Revendications

1. Procédé d'aide à l'atterrissage ou à l'appontage d'un aéronef (104) piloté à bord, l'aéronef étant de type aéronef léger motorisé adapté au vol à vue, le procédé étant mis en oeuvre par un système comprenant un dispositif (102) au sol de localisation de l'aéronef, l'aéronef embarquant un émetteur (146) émettant des signaux de manière asynchrone au dispositif au sol, le procédé comprenant au moins les étapes suivantes :
- le dispositif de localisation au sol détermine, à partir de signaux émis par ledit émetteur (146), la position et/ou le déplacement de l'aéronef (104), le dispositif (102) au sol de localisation comprenant une balise de référence (213) et au moins deux senseurs passifs (211, 212) espacés, chacun des au moins deux senseurs passifs (211, 212) comprenant un panneau antennaire comportant plusieurs blocs d'antennes sur sa surface, les au moins deux senseurs passifs (211, 212) étant fixés à une extrémité d'une surface d'atterrissage ou d'appontage (202a) dans un plan sensiblement orthogonal à ladite surface d'atterrissage ou d'appontage (202a) de manière à rayonner vers icelle (202a), chaque senseur (211, 212) étant incliné autour d'un axe orthogonal au plan dudit senseur de manière à ce que les paires de blocs d'antennes dudit senseur soient disposées le long d'un axe formant un angle α avec un axe orthogonal à ladite surface d'atterrissage ou d'appontage (202a), lesdits senseurs étant aptes à recevoir lesdits signaux émis par ledit émetteur (146) pour localiser ledit aéronef par triangulation, ladite balise de référence (213) étant placée à l'autre extrémité de ladite surface d'atterrissage ou d'appontage (202a) et émettant un signal de calibration vers lesdits senseurs à une fréquence différente de la fréquence des signaux émis par ledit émetteur (146) ;
- ledit dispositif de localisation au sol (102) transmet à l'aéronef (104) les données de position et/ou de déplacement de l'aéronef déterminées précédemment ;
- des moyens d'affichage présents dans l'aéronef ou des moyens de communication radio présents dans l'aéronef (160, 160', 170) présentent au pilote de l'aéronef au moins certaines desdites données pour l'assister dans l'atterrissage ou l'appontage.

2. Procédé d'aide à l'atterrissage ou à l'appontage d'un aéronef selon la revendication 1, dans lequel l'émetteur embarqué dans l'aéronef émet un signal sinusoïdal continu.

3. Procédé d'aide à l'atterrissage ou à l'appontage d'un aéronef selon la revendication 1 ou 2, le procédé étant **caractérisé en ce qu'**il comprend également une étape de corrélation des données issues du dispositif (102) de localisation de l'aéronef (104) à partir du sol avec les données produites par les instruments du bord, les résultats de cette étape de corrélation étant exploités à bord de l'aéronef.

4. Procédé d'aide à l'atterrissage ou à l'appontage d'un aéronef selon la revendication 3, **caractérisé en ce qu'**on détermine un indice de cohérence des données à partir de l'étape de corrélation, et **en ce qu'**on lève une alarme pour le pilote lorsque ledit indice est en deçà d'un seuil fixé.

5. Procédé d'aide à l'atterrissage ou à l'appontage d'un aéronef selon l'une quelconque des revendications précédentes, une liaison de données radioélectrique bidirectionnelle (154, 156) étant établie entre le dispositif (102) de localisation au sol et l'aéronef (104), le procédé étant **caractérisé en ce que** des mesures issues d'instruments embarqués par l'aéronef sont transmises au dispositif (102) de localisation au sol via ladite liaison de données (156), ledit dispositif au sol exploitant lesdites mesures pour affiner sa détermination des données relatives à la position et/ou au déplacement de l'aéronef.

6. Procédé d'aide à l'atterrissage ou à l'appontage d'un aéronef selon la revendication 5, **caractérisé en ce que** l'aéronef (104) insère, parmi les données émises vers le dispositif (102) de localisation au sol, un identifiant propre à l'aéronef (104), ledit dispositif (102) insérant en retour ledit identifiant parmi les données transmises vers l'aéronef (104).

7. Système d'aide à l'atterrissage ou à l'appontage d'un aéronef (104) piloté à bord, l'aéronef étant de type aéronef léger motorisé adapté au vol à vue, le système comprenant :
- un dispositif au sol (102) de localisation de l'aéronef,
- au moins un émetteur embarqué (146) configuré pour émettre des signaux de manière asynchrone du dispositif au sol,
- des moyens de transmission de données (121, 148) du dispositif de localisation vers l'aéronef (104), et
- dans le cockpit de l'aéronef des moyens d'affichage (160, 160', 170) desdites données transmises à l'aéronef,
ledit dispositif (102) au sol de localisation comprenant une balise de référence (213) et au moins deux senseurs passifs (211, 212) espacés, chacun des au moins deux senseurs passifs (211, 212) comprenant un panneau antennaire comportant plusieurs blocs d'antennes sur sa surface, les au moins deux senseurs passifs (211, 212) étant configurés pour être fixés à une extrémité d'une surface d'atterrissage ou d'appontage (202a) dans un plan sensiblement orthogonal à ladite surface d'atterrissage ou d'appontage (202a) de manière à rayonner vers icelle (202a), chaque senseur (211, 212) étant incliné autour d'un axe orthogonal au plan dudit senseur de manière à ce que les paires de blocs d'antennes dudit senseur soient disposées le long d'un axe formant un angle α avec un axe orthogonal à ladite surface d'atterrissage ou d'appontage (202a), lesdits senseurs étant configurés pour recevoir lesdits signaux émis par ledit émetteur (146) pour localiser ledit aéronef par triangulation, ladite balise de référence (213) étant placée à l'autre extrémité de ladite surface d'atterrissage ou d'appontage (202a) et configurée pour émettre un signal de calibration vers lesdits senseurs à une fréquence différente de la fréquence des signaux émis par ledit émetteur (146).

8. Système d'aide à l'atterrissage ou à l'appontage d'un aéronef selon la revendication 7, le système étant **caractérisé en ce qu'**il comprend un module de traitement (145) embarqué relié aux moyens de transmissions de données (148), aux moyens d'affichage (160) et à des instruments de mesures à bord (144), le module de traitement (145) étant adapté à corréler les mesures issues desdits instruments (144) du bord avec les mesures issues desdits moyens (148) de transmissions de données.

9. Système d'aide à l'atterrissage ou à l'appontage d'un aéronef selon la revendication 7 ou 8, **caractérisé en ce que** les moyens d'affichage sont un écran (160) associé un instrument de secours (142) intégré à l'aéronef (104).

10. Système selon l'une quelconque des revendications 7 à 9, **caractérisé en ce qu'**il comprend également des moyens d'émission de données (148') embarqués dans l'aéronef (104), lesdits moyens d'émission (148') couplés aux moyens de transmission (148) permettant d'établir une liaison bidirectionnelle entre le dispositif (102) de localisation au sol et l'aéronef (104).

11. Système selon l'une quelconque des revendications 7 à 10, **caractérisé en ce que** les moyens de transmission de données embarqués (148) et l'émetteur embarqué (146) sont intégrés dans une même balise multifonctions (149).

12. Système selon l'une quelconque des revendications 7 à 11, dans lequel l'aéronef ne comporte pas de système d'atterrissage aux instruments.

## Patentansprüche

1. Verfahren zum Assistieren bei der Landung oder der Decklandung eines bemannten Luftfahrzeugs (104), wobei das Luftfahrzeug vom Leichtluftfahrzeugtyp mit Motorantrieb ist, ausgelegt für Sichtflug, wobei das Verfahren von einem System durchgeführt wird, das ein Bodengerät (102) zum Orten des Luftfahrzeugs hat, wobei sich ein Sender (146) an Bord des Luftfahrzeugs befindet, der Signale auf asynchrone Weise an das Bodengerät sendet, wobei das Verfahren mindestens die folgenden Schritte umfasst:
- Bestimmen, durch das Bodenortungsgerät, auf der Basis von von dem Sender (146) ausgesendeten Signalen, der Position und/oder der Bewegung des Luftfahrzeugs (104), wobei das Bodenortungsgerät (102) eine Referenzbake (213) und mindestens zwei beabstandete passive Sensoren (211, 212) umfasst, wobei jeder der mindestens zwei passiven Sensoren (211, 212) ein Antennenpaneel mit mehreren Antennenblöcken auf seiner Oberfläche umfasst, wobei die mindestens zwei passiven Sensoren (211, 212) an einem Ende einer Landefläche oder einer Decklandefläche (202a) in einer Ebene im Wesentlichen orthogonal zur Landefläche oder zur Decklandefläche (202a) befestigt ist, um auf diese (202a) zu strahlen, wobei jeder Sensor (211, 212) um eine Achse orthogonal zur Ebene des Sensors auf eine solche Weise geneigt ist, dass die Antennenblockpaare des Sensors entlang einer Achse angeordnet sind, die einen Winkel α mit einer Achse orthogonal zur Landefläche oder zur Decklandefläche (202a) bildet, wobei die Sensoren die von dem Sender (146) ausgestrahlten Signale empfangen können, um das Luftfahrzeug durch Triangulation zu orten, wobei die Referenzbake (213) am anderen Ende der Landefläche oder der Decklandefläche (202a) platziert ist und ein Kalibrationssignal an die Sensoren mit einer Frequenz aussendet, die sich von der Frequenz der vom Sender (146) ausgestrahlten Signale unterscheidet;
- Senden, durch das Bodenortungsgerät (102) an das Luftfahrzeug (104), der zuvor bestimmten Positions- und/oder Bewegungsdaten des Luftfahrzeugs;
- Präsentieren, durch Anzeigemittel im Luftfahrzeug oder Funkkommunikationsmittel im Luftfahrzeug (160, 160', 170), dem Piloten des Luftfahrzeugs mindestens bestimmter der Daten, um ihm bei der Landung oder bei der Decklandung zu assistieren.

2. Verfahren zum Assistieren bei der Landung oder der Decklandung eines Luftfahrzeugs nach Anspruch 1, bei dem der Sender an Bord des Luftfahrzeugs ein kontinuierliches Sinussignal aussendet.

3. Verfahren zum Assistieren bei der Landung oder der Decklandung eines Luftfahrzeugs nach Anspruch 1 oder 2, wobei das Verfahren **dadurch gekennzeichnet ist, dass** es auch einen Schritt des Korrelierens der vom Bodengerät (102) zum Orten des Luftfahrzeugs (104) kommenden Daten mit den von den Bordinstrumenten produzierten Daten umfasst, wobei die Ergebnisse dieses Korrelationsschrittes an Bord des Luftfahrzeugs genutzt werden.

4. Verfahren zum Assistieren bei der Landung oder der Decklandung eines Luftfahrzeugs nach Anspruch 3, **dadurch gekennzeichnet, dass** ein Kohärenzindex der Daten auf der Basis des Korrelationsschrittes bestimmt wird, und dadurch, dass ein Alarm für den Piloten ausgelöst wird, wenn der Index jenseits einer festgelegten Schwelle liegt.

5. Verfahren zum Assistieren bei der Landung oder der Decklandung eines Luftfahrzeugs nach einem der vorherigen Ansprüche, wobei eine bidirektionale Funkdatenverbindung (154, 156) zwischen dem Bodenortungsgerät (102) und dem Luftfahrzeug (104) eingerichtet wird, wobei das Verfahren **dadurch gekennzeichnet ist, dass** die von den Instrumenten an Bord des Luftfahrzeugs kommenden Messwerte an das Bodenortungsgerät (102) über die Datenverbindung (156) gesendet werden, wobei das Bodengerät die Messwerte zum Präzisieren der Bestimmung der Daten relativ zur Position und/oder zur Bewegung des Luftfahrzeugs nutzt.

6. Verfahren zum Assistieren bei der Landung oder der Decklandung eines Luftfahrzeugs nach Anspruch 5, **dadurch gekennzeichnet, dass** das Luftfahrzeug (104) unter den an das Bodenortungsgerät (102) gesendete Daten eine für das Luftfahrzeug (104) spezifische Kennung einfügt, wobei das Gerät (102) die Kennung bei der Rückkehr unter den an das Luftfahrzeug (104) gesendeten Daten einfügt.

7. System zum Assistieren bei der Landung oder der Decklandung eines bemannten Luftfahrzeugs (104), wobei das Luftfahrzeug vom Leichtluftfahrzeuttyp mit Motorantrieb ist, ausgelegt für Sichtflug, wobei das System Folgendes umfasst:
- ein Bodengerät (102) zum Orten des Luftfahrzeugs,
- mindestens einen an Bord befindlichen Sender (146), konfiguriert zum Aussenden von Signalen auf asynchrone Weise vom Bodengerät,
- Mittel zum Senden von Daten (121, 148) vom Ortungsgerät an das Luftfahrzeug (104), und
- Mittel (160, 160', 170) zum Anzeigen der an das Luftfahrzeug gesendeten Daten im Cockpit des Luftfahrzeugs,
wobei das Bodenortungsgerät (102) eine Referenzbake (213) und mindestens zwei beabstandete passive Sensoren (211, 212) umfasst, wobei jeder der mindestens zwei passiven Sensoren (211, 212) ein Antennenpaneel umfasst, das mehrere Antennenblöcke auf seiner Oberfläche umfasst, wobei die mindestens zwei passiven Sensoren (211, 212) zum Befestigen an einem Ende einer Landefläche oder einer Decklandefläche (202a) in einer Ebene im Wesentlichen orthogonal zur Landefläche oder zur Decklandefläche (202a) konfiguriert sind, um in Richtung auf diese (202a) zu strahlen, wobei jeder Sensor (211, 212) um eine Achse orthogonal zur Ebene des Sensors auf eine solche Weise geneigt ist, dass die Paare von Antennenblöcken des Sensors entlang einer Achse angeordnet sind, die einen Winkel α mit einer Achse orthogonal zu der Landefläche oder der Decklandefläche (202a) bildet, wobei die Sensoren zum Empfangen der von dem Sender (146) ausgesendeten Signale zum Orten des Luftfahrzeugs durch Triangulation konfiguriert sind, wobei die Referenzbake (213) am anderen Ende der Landefläche oder der Decklandefläche (202a) platziert und zum Aussenden eines Kalibrationssignals an die Sensoren mit einer Frequenz konfiguriert ist, die sich von der Frequenz der vom Sender (146) ausgesendeten Signale unterscheidet.

8. System zum Assistieren bei der Landung oder der Decklandung eines Luftfahrzeugs nach Anspruch 7, wobei das System **dadurch gekennzeichnet ist, dass** es ein Bordverarbeitungsmodul (145) umfasst, das mit den Datenübertragungsmitteln (148), den Anzeigemitteln (160) und Bordmessinstrumenten (144) verbunden ist, wobei das Verarbeitungsmodul (145) zum Korrelieren der von den Bordmessinstrumenten (144) kommenden Messwerte mit den von den Datenübertragungsmitteln (148) kommenden Messwerten ausgelegt ist.

9. System zum Assistieren bei der Landung oder der Decklandung eines Luftfahrzeugs nach Anspruch 7 oder 8, **dadurch gekennzeichnet, dass** die Anzeigemittel ein Bildschirm (160) sind, der mit einem im Luftfahrzeug (104) integrierten Hilfsinstrument (142) assoziiert ist.

10. System nach einem der Ansprüche 7 bis 9, **dadurch gekennzeichnet, dass** es auch Datenemissionsmittel (148') an Bord des Luftfahrzeugs (104) umfasst, wobei die Emissionsmittel (148') mit den Übertragungsmitteln (148) gekoppelt sind, so dass eine bidirektionale Verbindung zwischen dem Bodenortungsgerät (102) und dem Luftfahrzeug (104) hergestellt werden kann.

11. System nach einem der Ansprüche 7 bis 10, **dadurch gekennzeichnet, dass** die Datenübertragungsmittel (148) an Bord und der Sender (146) an Bord in einer selben Multifunktionsbake (149) integriert sind.

12. System nach einem der Ansprüche 7 bis 11, bei dem das Luftfahrzeug kein Instrumentenlandesystem umfasst.

## Claims

1. Method for assisting in the landing or decking of a manned aircraft (104), the aircraft being of the engine-powered light aircraft type suitable for visual flight, the method being implemented by a system comprising a device (102) on the ground for locating the aircraft, the aircraft having an onboard sender (146) sending signals asynchronously to the device on the ground, the method comprising at least the following steps:
- the locating device on the ground determines, based on signals sent by said sender (146), the position and/or the movement of the aircraft (104), the locating device (102) on the ground comprising a reference beacon (213) and at least two passive sensors (211, 212) which are spaced apart, each of the at least two passive sensors (211, 212) comprising an antenna panel comprising a plurality of antenna blocks on its surface, the at least two passive sensors (211, 212) being fixed at one end of a landing or decking surface (202a) in a plane that is substantially orthogonal with respect to said landing or decking surface (202a) so as to radiate toward it (202a), each sensor (211, 212) being inclined about an axis that is orthogonal with respect to the plane of said sensor, such that the pairs of antenna blocks of said sensor are arranged along an axis forming an angle α with an axis that is orthogonal with respect to said landing or decking surface (202a), said sensors being capable of receiving said signals sent by said sender (146) in order to locate said aircraft via triangulation, said reference beacon (213) being placed at the other end of said landing or decking surface (202a) and sending a calibration signal to said sensors at a frequency that differs from the frequency of the signals sent by said sender (146);
- said locating device on the ground (102) transmits the previously determined aircraft position and/or movement data to the aircraft (104);
- display means in the aircraft or radio communication means in the aircraft (160, 160', 170) show the pilot of the aircraft at least some of said data to assist in the landing or decking.

2. Method for assisting in the landing or decking of an aircraft according to claim 1, in which the onboard sender in the aircraft sends a continuous sinusoidal signal.

3. Method for assisting in the landing or decking of an aircraft according to claim 1 or 2, the method being characzerized in that it also comprises a step of correlating the data obtained from the device (102) for locating the aircraft (104) from the ground with the data produced by the onboard instruments, the results of this correlation step being utilized on board the aircraft.

4. Method for assisting in the landing or decking of an aircraft according to claim 3, **characterized in that** a data consistency index is determined from the correlation step, and **in that** an alarm is raised for the pilot when said index is below a set threshold.

5. Method for assisting in the landing or the decking of an aircraft according to any one of the preceding claims, a bidirectional radiofrequency data link (154, 156) being set up between the locating device (102) on the ground and the aircraft (104), the method being **characterized in that** measurements obtained from instruments on board the aircraft are transmitted to the locating device (102) on the ground via said data link (156), said device on the ground utilizing said measurements to refine its determination of the data relating to the position and/or the movement of the aircraft.

6. Method for assisting in the landing or the decking of an aircraft according to claim 5, **characterized in that** the aircraft (104) inserts, from the data sent to the locating device (102) on the ground, an identifier specific to the aircraft (104), said device (102) inserting in return said identifier among the data transmitted to the aircraft (104).

7. System for assisting in the landing or the decking of a manned aircraft (104), the aircraft being of the engine-powered light aircraft type suitable for visual flight, the system comprising:
- a device on the ground (102) for locating the aircraft,
- at least one onboard sender (146) configured for sending signals asynchronously from the device on the ground,
- means for transmitting data (121, 148) from the locating device to the aircraft (104), and
- in the cockpit of the aircraft, means for displaying (160, 160', 170) said data transmitted to the aircraft,
said locating device (102) on the ground comprising a reference beacon (213) and at least two passive sensors (211, 212) that are spaced apart, each of the at least two passive sensors (211, 212) comprising an antenna panel comprising a plurality of antenna blocks on its surface, the at least two passive sensors (211, 212) being configured to be fixed at one end of a landing or decking surface (202a) in a plane substantially orthogonal with respect to said landing or decking surface (202a) so as to radiate toward it (202a), each sensor (211, 212) being inclined about an axis that is orthogonal with respect to the plane of said sensor such that the pairs of antenna blocks of said sensor are arranged along an axis forming an angle α with an axis that is orthogonal with respect to said landing or decking surface (202a), said sensors being configured to receive said signals sent by said sender (146) in order to locate said aircraft via triangulation, said reference beacon (213) being placed at the other end of said landing or decking surface (202a) and being configured to send a calibration signal to said sensors at a frequency that differs from the frequency of the signals sent by said sender (146).

8. System for assisting in the landing or decking of an aircraft according to claim 7, the system being **characterized in that** it comprises an onboard processing module (145) connected to the data transmission means (148), to the display means (160) and to onboard measuring instruments (144), the processing module (145) being suitable for correlating the measurements obtained from said onboard instruments (144) with the measurements obtained from said data transmission means (148).

9. System for assisting in the landing or the decking of an aircraft according to claim 7 or 8, **characterized in that** the display means are a screen (160) associated with a standby instrument (142) integrated in the aircraft (104).

10. System according to any one of claims 7 to 9, **characterized in that** it also comprises onboard data sending means (148') in the aircraft (104), said sending means (148') coupled with the transmission means (148) allowing for a bidirectional link between the locating device (102) on the ground and the aircraft (104) to be set up.

11. System according to any one of claims 7 to 10, **characterized in that** the onboard data transmission means (148) and the onboard sender (146) are integrated in one and the same multifunction beacon (149).

12. System according to any one of claims 7 to 11, in which the aircraft does not include any instrument landing system.
